# DEMANDE DE BREVET EUROPEEN

(11) **EP 1 067 222 A1**
(43) Date de publication de la demande: **10.01.2001**
(21) Numéro de dépôt: 00401855.2
(22) Date de dépôt: 29.06.2000
(51) Int. Cl.: D01D 5/34, D01F 8/10, G02B 6/18

(54) **Procédé de fabrication d'une fibre optique plastique à gradient d'indice**

(30) Priorité: 05.07.1999 FR 9908617
(71) Demandeur: ALCATEL, 75008 Paris (FR)
(72) Inventeur: Perrin, Bernard, 91530 Saint-Cheron (FR); Pastouret, Alain, 91120 Palaiseau (FR); Morichere, Dominique, 75005 Paris (FR); Andrieu, Xavier, 91220 Bretigny sur Orge (FR)
(74) Mandataire: Feray, Valérie

(57) **Abrégé**

Procédé de fabrication d'une fibre optique plastique (6) à gradient d'indice, de profil d'indice continu, à partir d' un polymère P particulier et d' un composé M1 particulier, ledit procédé comprenant :
- la préparation de deux compositions (13, 14) d'indice de réfraction différent, comprenant chacune au moins P, l'une comprenant aussi M1, un photo amorceur de réticulation étant présent dans une desdites compositions (13, 14),
- l'inter diffusion des compositions (13, 14), et • le filage des compositions (13, 14) de façon à obtenir la fibre (6),
**caractérisé en ce que :**
- l'on procède en outre avant le filage au mélange actif des deux compositions (13, 14) à l'aide d'au moins un moyen de mélange (2, 16, 17, 26), **et**
- le filage de la fibre (6) est suivi d'une réticulation (7).

Dispositif de mise en oeuvre dudit procédé en ce que le mélangeur utilisé est statique (1) ou dynamique (24).

## Description

La présente invention concerne un procédé de fabrication d'une fibre optique plastique à gradient d'indice.

Les fibres optiques plastiques à gradient d'indice, utilisables dans une gamme spectrale couvrant le visible jusqu'au proche infrarouge, sont intéressantes en ce qu'elles peuvent être appliquées aux réseaux d'accès large bande. Une fibre optique plastique à gradient d'indice peut comprendre au moins un polymère et au moins un autre composé, la proportion du polymère étant sensiblement la même sur toute la fibre et la proportion du composé variant du coeur à la périphérie de la fibre de façon à former le gradient d'indice désiré. Ledit composé, qui peut être appelé dopant ou diluant, comprend au moins un produit. La fabrication de telles fibres optiques plastiques est délicate, en ce qu'il s'agit de réaliser une distribution dudit composé variant du coeur à la périphérie d'une fibre optique plastique. En effet, la fibre doit posséder un profil d'indice de réfraction de type gradient d'indice le plus lisse possible, dont la variation d'indice de réfraction entre le centre et la périphérie de la fibre est généralement comprise entre 0,01 et 0,03.

On peut distinguer deux principaux types de réalisation dudit gradient d'indice.

Dans un premier mode de réalisation, le gradient d'indice est réalisé au moins partiellement, avant filage en fibre optique à l'aide d'une filière, par diffusion de composé(s) dans au moins un polymère donné. Ledit composé peut éventuellement être lui-même au moins partiellement un autre polymère.

Dans une première mise en oeuvre possible de ce premier mode de réalisation, une telle diffusion peut se produire dans ledit polymère donné à l'état fondu. Ainsi, le brevet US-A-5.593.621 décrit la fabrication d'une fibre optique plastique à gradient d'indice par formation d'un cylindre d'un premier polymère fondu, puis injection d'un matériau transparent en portion centrale dudit cylindre, ledit matériau transparent étant diffusible et non polymérisable, éventuellement mélangé à un second polymère fondu transparent, et d'indice de réfraction différent de celui du premier polymère. Après diffusion dudit matériau non polymérisable dans le premier polymère, on réalise l'extrusion du cylindre en fibre optique. Pour une telle réalisation, il est possible d'installer plusieurs buses s'encastrant les unes dans les autres de façon à améliorer la diffusion dudit matériau.

Dans une deuxième mise en oeuvre possible de ce premier mode de réalisation, une telle diffusion peut se produire dans ledit polymère dilué. Ainsi la demande de brevet JP-A-9.243.835 décrit la fabrication d'une fibre optique plastique à gradient d'indice comprenant un polymère transparent formant matrice, un second composé non polymérisable d'indice de réfraction plus élevé que celui du polymère transparent, et un troisième composé non polymérisable d'indice de réfraction plus faible que celui du polymère transparent. Le deuxième composé est plus concentré au coeur de la fibre. Le troisième composé est plus concentré à la périphérie de la fibre. La fabrication consiste en la préparation de couches de différentes compositions en deuxième et troisième composés, ainsi qu'en monomère source du polymère transparent, lesdites compositions étant chargées par une buse multiorifices. Après diffusion entre les couches et filage, la diffusion pouvant se produire avant ou pendant le filage, la fabrication de la fibre est finalisée par polymérisation desdites couches pour transformer le monomère en polymère.

En ce qui concerne le second mode de réalisation du gradient d'indice, le gradient d'indice est réalisé pratiquement totalement après filage de la fibre optique, à l'aide d'une filière, par application d'au moins une couche de revêtement. Cette couche de revêtement peut comprendre au moins un polymère à l'état fondu. Ainsi, la demande de brevet JP-A-9.133.819 décrit la fabrication en continu d'une fibre optique plastique à gradient d'indice par application de matières plastiques fondues d'au moins deux types différents et d'indices de réfraction décroissant autour de la fibre plastique constituant l'âme de la fibre d'indice plus élevé.

Alternativement, la couche de revêtement peut aussi comprendre au moins un composé au moins partiellement polymérisable. Ainsi, la demande de brevet JP-A-9.138.313 divulgue une méthode de fabrication d'une fibre optique plastique à gradient d'indice, par application d'une solution obtenue en diluant un polymère avec un composé à bas indice de réfraction dans un monomère, autour d'une âme en plastique dont l'indice est le plus élevé. Le monomère polymérisé constitue la première couche de polymère d'indice de réfraction plus bas que celui de l'âme. De la même manière on dépose différentes couches, dont l'indice de réfraction diminue progressivement du centre vers la périphérie. Chaque couche est polymérisée par traitement UV (UltraViolet) après son application. Dans l'exemple, la viscosité des solutions appliquées sur l'âme a été ajustée entre 5000 et 10000 poises soit entre 500 et 1000 Pa.s. Pour la mise en oeuvre de l'invention, le composé à bas indice de réfraction n'est pas polymérisable.

D'autre part, la demande de brevet JP-A-6.003.533 décrit la fabrication en continu d'une fibre optique plastique à gradient d'indice en multicouche par préparation de produits de différents indices de réfraction puis application de couches séparées, diffusion entre les couches puis durcissement desdites couches.

Toutes les méthodes de fabrication précédentes font appel à la diffusion de composés de couches voisines, ce qui implique que lesdites méthodes sont lentes et peu reproductibles. Ceci pose des problèmes majeurs pour l'application industrielle de la fabrication de fibres optiques plastiques à gradient d'indice.

Le procédé de fabrication selon l'invention vise à réaliser de la façon la plus efficace possible, principalement en termes de rapidité et de reproductibilité, la fabrication de fibres optiques plastiques à gradient d'indice.

La présente invention concerne un procédé de fabrication d'une fibre optique plastique à gradient d'indice, l'indice de réfraction variant continûment entre le centre et la périphérie, ladite fibre étant fabriquée à partir d'au moins un polymère P et d'au moins un composé M1 permettant de faire varier l'indice de réfraction, ledit procédé comprenant :
- la préparation de deux compositions d'indice de réfraction différent, la différence d'indice de réfraction entre les deux compositions étant au moins de 5. 10⁻³, comprenant chacune au moins le polymère P, l'une desdites compositions, dite première composition, comprenant en outre au moins le composé M1, un photo amorceur de réticulation étant présent dans au moins une desdites compositions,
- la diffusion des deux compositions l'une dans l'autre, et
- le filage dudit mélange de façon à obtenir une fibre optique plastique à gradient d'indice,
**ledit procédé étant caractérisé en ce que :**
- l'on choisit le polymère P et le composé M1 tels que :
   - ledit polymère P est de masse moléculaire comprise entre 1000 et 20 000 et ledit composé M1 est de masse moléculaire comprise entre 100 et 1000,
   - ledit composé M1 comprend au moins un groupement fonctionnel réactif choisi dans le groupe formé par les vinyls et les acrylates,
   - le polymère P comprend au moins un groupement fonctionnel réactif choisi dans le groupe formé par les vinyls et les acrylates,
   - l'un au moins des deux composés P et M1 est au moins mono fonctionnel, l'autre des deux composés P et M1 est au moins bi-fonctionnel, **en ce que**
- l'on procède en outre avant le filage au mélange actif des deux compositions à l'aide d'au moins un moyen de mélange afin d'obtenir la variation continue de l'indice de la fibre optique, **et en ce que**
- le filage de la fibre optique plastique à gradient d'indice est suivi d'une réticulation conduisant à un réseau tridimensionnel réticulé.

Selon l'invention, il est préféré et jugé plus adéquat l'emploi du terme "filage" au lieu de terme "étirage", bien que souvent il y ait confusion possible entre les deux termes, surtout lors de traductions de documents. En effet l'étirage s'applique généralement à des matériaux solides, tandis que le filage s'applique généralement à des matériaux non solides, le plus souvent liquides. On ne peut pas étirer un solide.

Un tel mélange actif est un mélange que l'on aide à se former, c'est-à-dire qui ne se réalise pas seulement par diffusion, que ce soit de façon statique en forçant par un moyen de diffusion statique le mélange des deux compositions, le plus souvent par écoulement forcé, ou par un moyen dynamique qui réalise de façon active un tel mélange. Un tel procédé a l'avantage d'être rapide, notamment beaucoup plus rapide que si l'on utilise seulement la diffusion entre les compositions, et de permettre l'obtention d'un gradient de concentration et donc d'indice de réfraction continu et pratiquement lissé.

La cinétique de réticulation est généralement telle que, sous insoltation maximale et transformation complète du photo amorceur, le temps de gel est inférieur à 10 s, de préférence inférieur à 2s.

Selon le procédé de l'invention, le filage de la fibre optique plastique à gradient d'indice est suivi d'une polymérisation qui est une réticulation. Une telle réticulation permet avantageusement de figer au moins en partie les composants de la fibre optique plastique. La fibre optique plastique ainsi obtenue possède par conséquent une stabilité dans le temps et une stabilité en température. Dans un tel cas, généralement au moins une des deux compositions comprend un monomère ; de plus, au moins l'une des deux compositions comprend au moins un amorceur de réticulation, et de préférence chacune des deux compositions comprend au moins un amorceur de réticulation. L'amorceur de réticulation, qui est par exemple un photo amorceur, est un composé qui permet, par exemple thermiquement ou par radiation, d'initier la réaction de réticulation désirée.

Ladite réticulation conduit à un réseau tridimensionnel réticulé. Une telle réticulation permet avantageusement de figer pratiquement totalement les composants de la fibre optique plastique, et assure donc une meilleure stabilité physique et thermique de la fibre optique plastique obtenue et du gradient d'indice.

Selon un mode de réalisation, la seconde desdites compositions comprend au moins un composé M2 permettant lui aussi de faire varier l'indice de réfraction, le composé M2 étant d'indice de réfraction sensiblement différent de l'indice de réfraction de M1, ayant une masse moléculaire comprise entre 100 et 1000, et comprenant au moins un groupement fonctionnel réactif choisi dans le groupe formé par les vinyls et les acrylates.

De préférence, les composés M1 et M2 sont de viscosité pratiquement identiques et la proportion en masse dudit polymère P par rapport aux constituants de la composition est pratiquement constante pour chacune desdites compositions. Ainsi le procédé est plus facile à mettre en oeuvre car la variation de la proportion en composé(s) M1 et/ou M2, permettant principalement de moduler l'indice de réfraction, n'influence pas de façon significative la viscosité des compositions.

Selon un mode de réalisation du procédé selon l'invention, le mélange des deux compositions est réalisé à une température telle que la viscosité de chacune des deux compositions est comprise entre 1 et 25 Pa.s, de préférence entre 5 et 15 Pa.s. Ceci permet avantageusement de faciliter la mise en oeuvre du procédé selon l'invention, car une telle viscosité permet de procéder au mélange de compositions relativement fluides.

Selon un mode de réalisation du procédé selon l'invention, le filage est réalisé à une température telle que la viscosité de chacune des deux compositions est supérieure à 50 Pa.s, de préférence supérieure à 100 Pa.s. De même, ceci permet avantageusement de faciliter la mise en oeuvre du procédé selon l'invention, car une telle viscosité permet de procéder au filage de compositions relativement figées.

Les groupements réactifs fonctionnels portés par les constituants M1 et M2 ainsi que par le polymère P sont choisis dans le groupe formé par les vinyls et les acrylates, c'est-à-dire choisis dans le groupe formé par les acrylates, les méthacrylates et les vinyl éthers, lesdits groupements pouvant être au moins partiellement halogénés, le plus souvent fluorés et/ou chlorés.

Dans un mode de réalisation du procédé selon l'invention, tout composant d'une desdites compositions est un matériau au moins partiellement halogéné, le plus souvent fluoré et/ou chloré.

Selon une variante du procédé selon l'invention, dans le cas de la présence de composé M2 dans la seconde desdites compositions, l'un des deux composés M1 ou M2 est au moins partiellement fluoré et l'autre des deux composés M2 ou M1 est au moins partiellement chloré ou chloro fluoré, et donc d'indice de réfraction sensiblement supérieur à celui du monomère au moins partiellement fluoré.

L'invention concerne aussi un dispositif de mise en oeuvre du procédé de fabrication précédemment décrit. Dans un premier mode de réalisation, ce dispositif est **caractérisé en ce que** le moyen de mélange utilisé est un mélangeur de type statique. Dans un tel mélangeur, le mélange se fait principalement à l'aide d'un système fixe qui modifie les écoulements des compositions sous pression. C'est la forme du mélangeur qui induit la forme du gradient. La diffusion naturelle entre les compositions permet généralement de lisser le mélange.

Selon une première mise en oeuvre, le mélangeur comprend au moins deux plaques l'une au-dessus de l'autre, chaque plaque étant perforée par une pluralité de trous, lesdits trous étant disposés en opposition les uns par rapport aux autres d'une plaque à une autre plaque adjacente. Selon une deuxième réalisation, le mélangeur comprend au moins une cartouche à billes. Les billes de la cartouche peuvent être de diamètre pratiquement identique les unes par rapport aux autres. Il est aussi possible qu'au moins une partie des billes de la cartouche soit de diamètre sensiblement différente d'au moins une autre partie des billes de la cartouche. Par exemple la cartouche de billes est une répartition de billes de diamètre de plus en plus faible d'une extrémité à l'autre de la cartouche. Selon une troisième mise en oeuvre, le mélangeur comprend une pluralité de chicanes.

Dans un second mode de réalisation, ce dispositif est **caractérisé en ce que** le moyen de mélange utilisé est un mélangeur de type dynamique. Dans un tel mélangeur, le mélange se fait principalement par une action extérieure, généralement mécanique, de mélange, en plus de la diffusion naturelle entre les compositions et de l'écoulement sous pression. Selon une mise en oeuvre, le mélangeur comprend au moins un arbre autour duquel est fixée au moins une pale de mélange. Ladite pale peut comprendre en outre au moins un moyen de distribution d'au moins une des deux compositions. Un tel mélangeur comprend de plus toute pièce carénée, permettant d'éviter que la présence du mélangeur ne crée une zone de turbulence au sein des compositions.

La fibre optique plastique obtenue par le procédé de l'invention a l'avantage d'être utilisable dans une gamme spectrale allant du visible jusqu'au proche infrarouge, tout en possédant une faible atténuation, de quelques dizaines de dB/km sur l'ensemble de la gamme.

Un autre des avantages de la fibre optique obtenue selon le procédé de l'invention est de pouvoir être utilisée, à des températures élevées par rapport aux températures d'utilisation des fibres optiques plastiques de l'art antérieur, jusqu'à au moins 125°C, grâce à sa nature réticulée.

La fibre ainsi obtenue possède un profil d'indice de réfraction de type gradient d'indice pratiquement lissé, dont la variation d'indice de réfraction entre le centre et la périphérie de la fibre est généralement compris entre 0,01 et 0,03. Le diamètre de la fibre ainsi obtenue est généralement compris entre 100 µm et 1 mm.

L'invention sera mieux comprise et d'autres caractéristiques et avantages apparaîtront à la lecture de la description qui va suivre, donnée à titre non limitatif, par référence aux figures 1 à 7. Dans ces figures, les éléments communs portent les mêmes numéros de référence.

La figure 1 représente une vue en coupe schématique d'un dispositif dans lequel est mis en oeuvre un des modes de réalisation du procédé selon l'invention, avec un moyen de mélange statique.

La figure 2 représente une vue en perspective d'une pièce du dispositif de la figure 1.

La figure 3 représente une vue schématique du profil d'indice obtenu pour une fibre optique obtenue par le dispositif de la figure 1.

La figure 4 représente une vue en coupe schématique partielle d'un autre dispositif dans lequel est mis en oeuvre un des modes de réalisation du procédé selon l'invention, avec un moyen de mélange statique.

La figure 5 représente une vue en coupe schématique partielle d'un autre dispositif dans lequel est mis en oeuvre un des modes de réalisation du procédé selon l'invention, avec un moyen de mélange statique.

La figure 6 représente une vue en coupe schématique d'un dispositif dans lequel est mis en oeuvre un des modes de réalisation du procédé selon l'invention, avec un moyen de mélange dynamique.

La figure 7 représente une demi vue en perspective d'une variante de pièces du dispositif de la figure 6.

Le procédé selon l'invention comprend la réalisation de deux compositions, comprenant chacune un polymère P. Une desdites compositions comprend en outre au moins un composé M1, qui est de préférence un monomère. Eventuellement l'autre des compositions comprend au moins un composé M2, qui est de préférence un monomère. La concentration de M1 est différente dans chacune des deux compositions, ce qui donne un indice de réfraction différent à chacune desdites compositions. Les deux valeurs ainsi obtenues d'indice de réfraction constituent le maximum et le minimum de la courbe de gradient d'indice de forme parabolique que l'on cherche à obtenir pour la fibre optique plastique issue du procédé. Il s'agit de créer cette variation d'indice continue, par réalisation d'un mélange actif des deux compositions de départ. Pour cela, la mise en oeuvre du procédé selon l'invention se fait par un moyen de mélange qui peut être un mélangeur de type statique ou dynamique.

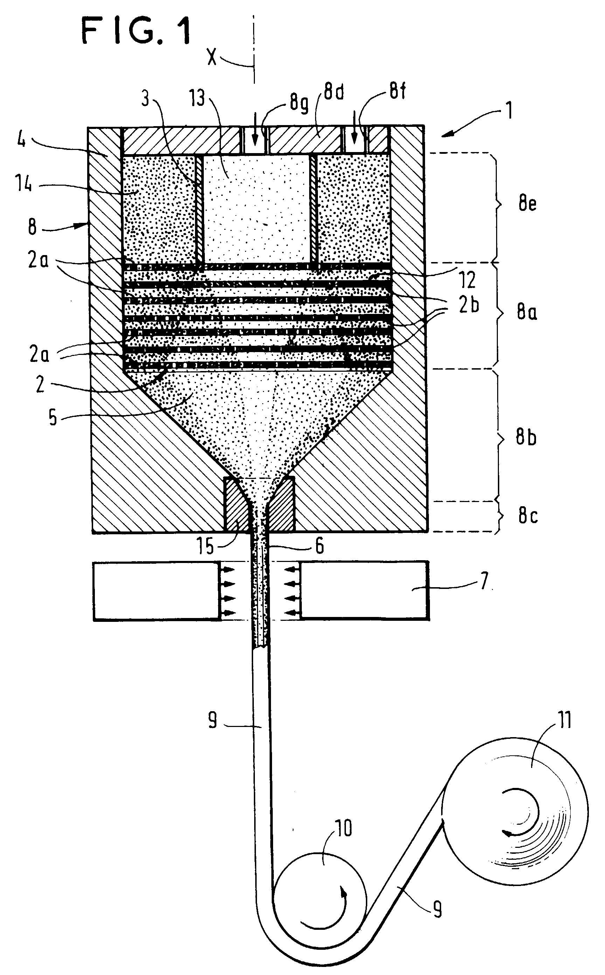

La figure 1 représente une vue en coupe très schématique, dans un plan comprenant un axe central X, d'un mélangeur 1 statique. Le mélangeur 1 comporte deux cylindres concentriques 3 et 4 servant de réservoirs aux compositions 13 et 14. C'est l'enceinte cylindrique 8 du mélangeur 1 qui sert de réservoir 4 à la composition 14. La composition 13 de plus fort indice de réfraction est placée dans le réservoir central 3. Elle comprend par exemple uniquement un polymère P, de préférence fluoré, et un composé M1, lequel porte un groupement chloré. La composition 14 de plus faible indice de réfraction est placée dans le réservoir périphérique 4. Elle comprend par exemple uniquement le polymère P, de préférence fluoré, et un composé M2, lequel porte un groupement fluoré.

L'enceinte 8 comprend une fermeture supérieure étanche 8d qui comporte deux entrées respectives 8g et 8f permettant d'assurer une pression contrôlée dans chacun des réservoirs respectifs 3 et 4, par exemple au moyen de deux pompes volumétriques (non représentées). Ainsi une pression contrôlée peut être appliquée sur les deux compositions 13 et 14 afin d'obtenir un écoulement identique si les deux compositions 13 et 14 ont la même viscosité. Mais il est aussi possible d'appliquer des pressions contrôlées différentes pour les ouvertures 8f et 8g, par exemple si l'on veut un écoulement différent pour chaque composition 13 ou 14 dans le cas de deux compositions 13 et 14 de viscosités différentes. L'enceinte 8 comprend aussi une zone 8e où les deux réservoirs 3 et 4 sont concentriques, isolés l'un de l'autre, ainsi qu'une zone 8a dont la limite supérieure est le bas du réservoir central 3 et dont la limite inférieure est le bas du réservoir périphérique 4. La zone 8a correspond à une zone de mélange des deux compositions 13 et 14 par le mélangeur 1, à savoir un ensemble 2 de plaques (2a, 2b) superposées et perforées de trous 12. L'enceinte 8 comprend encore une zone conique 8b où se produit une variation homothétique de la section, et enfin une zone calibrée 8c comprenant une filière 15, qui donne l'ordre de grandeur désiré au diamètre d'une fibre optique plastique à gradient d'indice 6 obtenue. La fiière 15 est une pièce rapportée, ce qui permet de changer aisément de calibrage sans avoir à changer de mélangeur 1. Selon une variante, il est possible que la filière 15 soit une partie de l'enceinte 8.

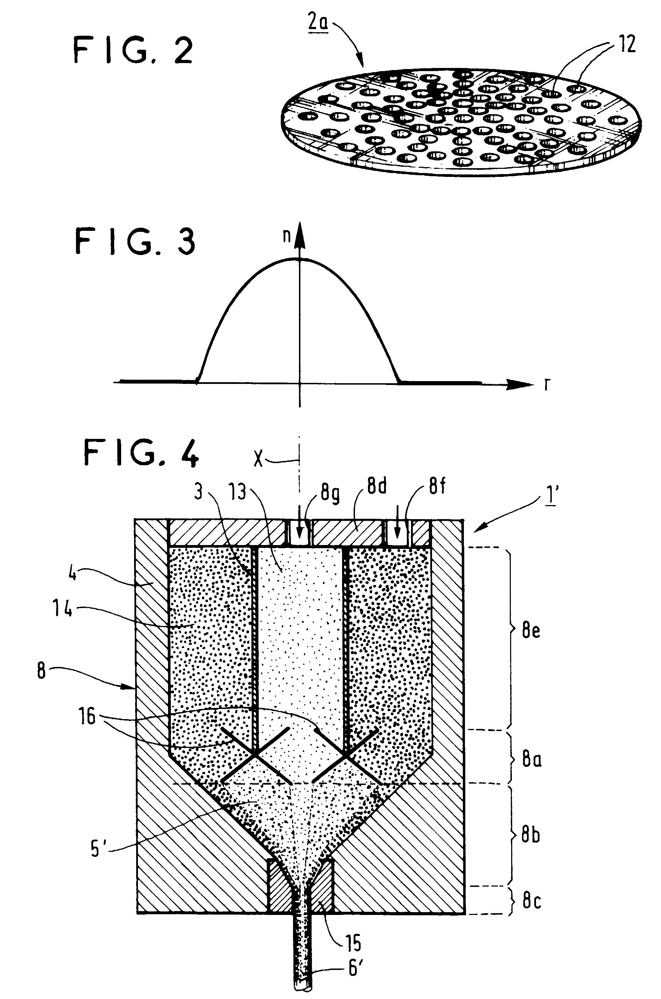

Le mélangeur 1 statique comporte dans sa zone 8a au moins deux, et ici sept, plaques (2a, 2b) perforées superposées les unes au dessus des autres. Cet ensemble 2 de plaques (2a, 2b) est placé à l'extrémité inférieure du réservoir central 3 de manière à assurer un mélange radial des compositions 13 et 14. On obtient un mélange 5 présentant un gradient de concentrations des compositions 13 et 14, dans la zone 8a. Le mélange 5 se forme grâce à la superposition des plaques (2a, 2b). Chaque plaque 2a (respectivement 2b), représentée sur la figure 2 en perspective, comporte des trous 12, lesdits trous 12 étant généralement disposés en opposition les uns par rapport aux autres d'une plaque 2a à une plaque voisine 2b (respectivement d'une plaque 2b à une plaque voisine 2a). Dans la représentation de la figure 1, il existe deux types de plaques, les plaques 2a, au nombre de quatre, et les plaques 2b, au nombre de trois, chacune des plaques 2a ou 2b comportant approximativement le même nombre de trous 12. Selon une variante non représentée, l'ensemble 2 des plaques (2a, 2b) est formé de plaques ne comportant pas chacune approximativement le même nombre de trous 12 que les autres plaques.

Selon une variante, on peut chauffer les deux compositions 13 et 14 en plaçant un dispositif calorifugé (non représenté) autour de la zone 8a de l'enceinte 8, et éventuellement autour d'une partie supérieure de la zone 8b de l'enceinte 8, jusqu'à obtention de la viscosité désirée pour lesdites compositions 13 et 14. La viscosité désirée est apte à faciliter le mélange desdites compositions 13 et 14. Quel que soit l'ensemble 2 de plaques (2a, 2b), le gradient de concentration dans le mélange 5, en relation avec le gradient d'indice de réfraction obtenu, est directement lié au nombre de plaques (2a, 2b) et à la variation radiale du nombre et du diamètre des trous 12 de chaque plaque (2a, 2b). Dans la zone de mélange 8a, la viscosité des compositions 13 et 14 est ainsi régulée à une valeur comprise entre 1 et 25 Pa.s afin de favoriser le mélange et de lisser le profil du gradient de concentration des compositions 13 et 14 grâce à une diffusion supplémentaire desdites compositions 13 et 14 l'une dans l'autre.

Le mélange 5 ainsi obtenu est amené à la filière 15 calibrée de la zone 8c de l'enceinte 8 par la zone conique 8b dont la limite supérieure est l'extrémité inférieure de la dernière plaque 2a. Cette variation homothétique permet de conserver la forme de la variation de concentration des compositions (13, 14).

Durant l'écoulement du mélange vers la filière 15, il est possible selon une variante non représentée de disposer un système de refroidissement cryogénique au moins en partie autour des zones 8b et/ou 8c de l'enceinte 8. Un tel système permet d'augmenter progressivement la viscosité du mélange 5 jusqu'à une valeur supérieure à 50 Pa.s compatible avec le filage du mélange 5 au travers de la filière 15.

En sortie de filière 15, le fil obtenu, qui est une fibre optique plastique à gradient d'indice, 6, est étiré par un cabestan 10. Selon un mode de réalisation, la fibre optique plastique 6 est durcie par photoréticulation à l'aide d'une source 7 de rayons Ultra Violets (UV) en une fibre optique plastique polymérisée 9. Puis, au moyen du cabestan 10, la fibre optique plastique 9 est enroulée sur une bobine 11. Le diamètre de la fibre 9 est donné par la filière 15, mais il peut être affiné selon la force de le filage réalisé au moyen du cabestan 10. On peut utiliser indifférement l'une des fibres optiques plastiques 6 ou 9 en tant que produit fini selon l'invention.

La figure 3 représente une vue schématique du profil d'indice obtenu pour une fibre optique fabriquée par le dispositif de la figure 1. On voit le profil de l'indice de réfraction n de la fibre optique (6) de la figure 1, pratiquement lissé de façon à former un gradient de forme parabolique, en fonction de la distance r au centre de la fibre (6), qui est sur l'axe X.

Selon une deuxième mise en oeuvre, le mélangeur statique 1 comprend, à la place de l'ensemble 2 de plaques (2a, 2b) du mélangeur 1 de la figure 1, un ensemble 16 de chicanes fixes représentées par une forme de croix symbolique sur la figure 4. Les chicanes sont des passages en zig-zag que sont obligées d'emprunter les compositions 13 et 14, réalisant ainsi progressivement un mélange 5'. La forme et la taille de l'ensemble 16 de chicanes induit directement le profil d'indice d'une fibre optique plastique à gradient d'indice 6' ainsi obtenue. Ce profil est du type de celui de la figure 3.

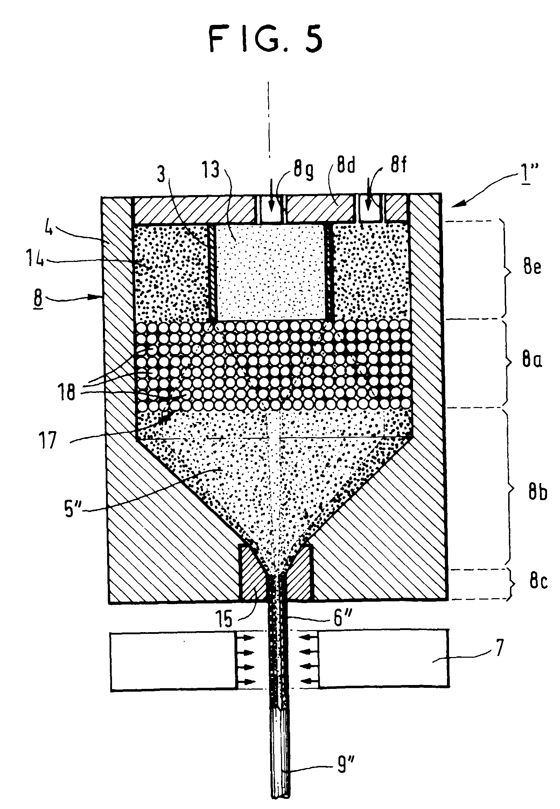

Selon une troisième mise en oeuvre, le mélangeur statique 1" comprend, à la place de l'ensemble 2 de plaques (2a, 2b) du mélangeur 1 de la figure 1, une cartouche 17 à billes 18, tel qu'illustré par la figure 5. Le mélange obtenu est un mélange 5". Les billes 18 peuvent toutes être de diamètre identique, comme représenté sur la figure 5, ou bien être par groupe ou isolément de diamètre différent de celui des billes ou des groupes de billes voisins. Dans ce cas, le gradient du mélange 5" ainsi obtenu dépend du diamètre et de la disposition des billes 18 dans la cartouche 17. On obtient ainsi une fibre optique plastique à gradient d'indice 6" qui est photoréticulée par la source 7 en une fibre optique polymérisée 9". Le profil des fibres optiques plastiques 6" et 9" est du type de celui de la figure 3.

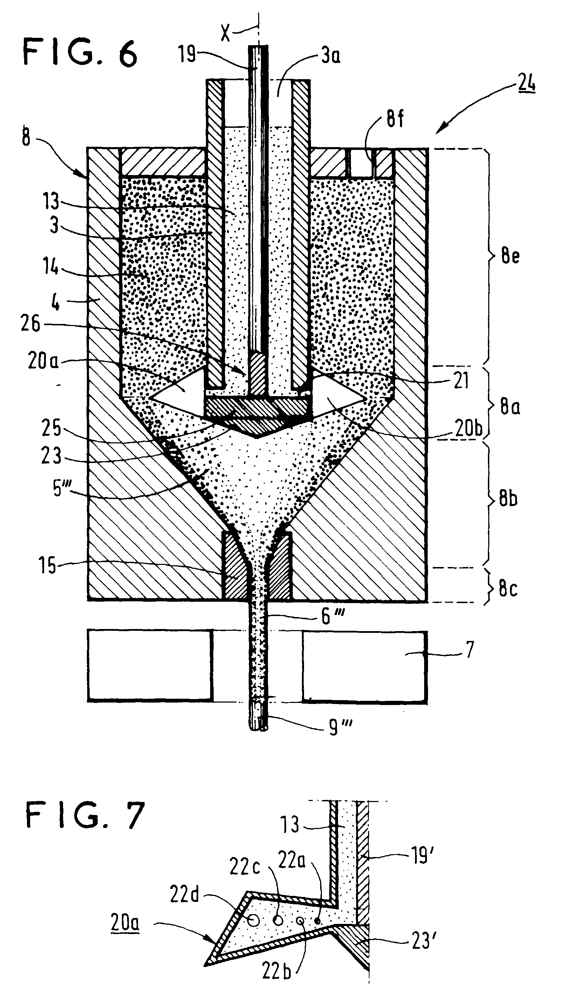

La figure 6 représente une vue en coupe très schématique, dans un plan comprenant un axe central X, d'un mélangeur 24 dynamique. Un mélange 5"' est assuré par un moyen de mélange 26 comprenant un arbre plein 19 d'axe X, qui manoeuvre deux pales 20a et 20b fixées à l'arbre 19 par l'intermédiaire d'une pièce 25 elle-même fixée à l'extrémité inférieure de l'arbre 19. Les pales 20a et 20b sont de forme identique mais symétriques par rapport à l'axe central X. Au-dessous de l'arbre 19 est installée une pièce 23 carénée pour éviter de créer une turbulence dans les compositions 13 et 14 et le mélange 5"'. On retrouve des éléments identiques à ceux de la figure 1, mais ici l'ouverture du réservoir central 3 est une ouverture 3a qui permet le passage de l'axe 19, et en bas du réservoir 3 c'est une ouverture circulaire 21 qui permet l'écoulement de la composition 13 vers les pales 20a et 20b. La rotation des pales 20a et 20b autour de l'arbre 9 permet de réaliser le mélange 5"'. La vitesse de rotation de l'arbre 9, le nombre et la disposition des pales 20a et 20b ont une influence directe sur le gradient du mélange 5"'. On obtient finalement une fibre optique plastique 6"' à gradient d'indice, qui est durcie par photoréticulation à l'aide d'une source 7 de rayons UV en une fibre optique plastique polymérisée 9"'.

Selon une variante du mélangeur 24 dynamique de la figure 5, représentée partiellement en demi-vue sur la figure 7, ce n'est plus l'ouverture circulaire 21 qui assure l'écoulement de la composition 13. Dans cette variante, les pales 20a et 20b sont creuses et percées de trous par exemple de forme circulaire 22a, 22b, 22c et 22d, qui sont des moyens de distribution de la composition 13 et qui permettent l'écoulement de la composition 13 en vue de son mélange avec la composition 14.

### Exemples

Les exemples qui suivent illustrent l'invention, sans toutefois en limiter la portée.

### A/ Synthèse des matériaux

### Exemple 1 : fabrication d'un polymère réactif de type poly (a fluoro) (méth)acrylate.

On fabrique un polymère photoréactif de formule suivante (P1): 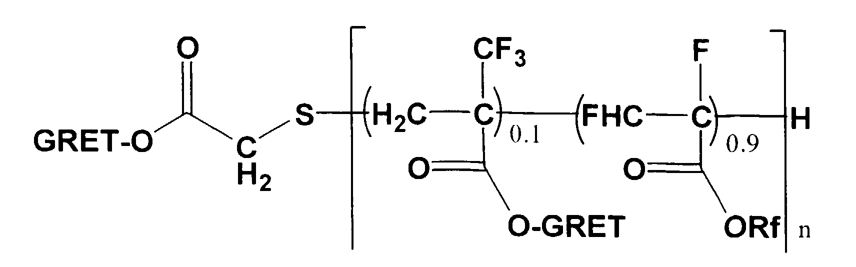 où GRET représente le groupement photoréticulable :
-CH₂-CH(OH)-CH₂-O-CO-C(CH₃)=CH₂ , et où Rf représente le groupement CH(CF₃)₂, servant à ajuster l'indice de réfraction.

Pour cela, on synthétise tout d'abord un polymère précurseur, puis on introduit les groupements photoréactifs sur le polymère précurseur.

Pour la synthèse du polymère précurseur, on dispose des matières premières suivantes : deux monomères, l'α,β-difluoroacrylate d'hexafluoroisopropyle et l'acide α-trifluorométhyle acrylique, l'agent de transfert étant l'acide thioglycolique et l'amorceur étant l'acide 4,4'-azobis (4-cyano) pentanoïque ou ACPA, en quantité d'une mole d'agent de transfert pour 20 moles de monomères et de 0,2 mole de amorceur pour 20 moles de monomères. La copolymérisation est amorcée de façon thermique, à une température d'environ 60°C. Selon une variante il est possible d'utiliser un autre amorceur, et dans ce cas la température, qui dépend de la nature de l'amorceur, est généralement comprise entre 60 et 120°C. Dans le cas du présent exemple, la copolymérisation radicalaire est effectuée en masse. Selon une variante elle peut également être effectuée en présence d'un solvant.

On obtient donc finalement un polymère précurseur comprenant 20 unités monomères. Le polymère (P1) est obtenu en faisant réagir trois moles de méthacrylate de glycidyle sur une mole dudit polymère en présence d'un catalyseur à base de chrome, le Chrome DIPS (diisopropylesalicylate). Le polymère (A) ainsi obtenu comporte trois groupements réactifs, de type méthacrylate.

### Exemple 2 : fabrication de mélanges à partir du polymère réactif de type poly (α fluoro) (méth)acrylate (P1) de l'exemple 1.

On fabrique deux mélanges différents, comportant un photoamorceur commercial, l'IRGACURE 651, le polymère réactif de formule (P1) de l'exemple 1, et un diluant réactif composé de deux monomères en proportions différentes selon le mélange, les deux monomères étant (M1) l'α-fluoroacrylate d'hexafluoroisopropyle, dont l'homopolymère à 20°C a un indice de réfraction égal à 1,3502 et (M2) l'α,β-difluoroacrylate de trichloroéthyle, dont l'homopolymère à 20°C a un indice de réfraction égal à 1,5063. Selon une variante, on peut utiliser tout autre photoamorceur de la famille des IRGACURE. Le tableau 1 résume les différentes compositions et propriétés des mélanges, les quantités étant calculées pour 700 grammes de mélange :

**Tableau 1**

| Mélange n° | Quantité de (M1) (en grammes) | Quantité de (M2) (en grammes) | Quantité du polymère réactif (en grammes) | Viscosité du mélange (en Pa.s à 20°C) | Indice de réfraction du mélange à 20°C |
|---|---|---|---|---|---|
| 1 | 35 | 315 | 350 | 8,2 | 1,4271 |
| 2 | 140 | 210 | 350 | 6,9 | 1,4037 |

On voit donc que le rapport, en % poids, du polymère sur la somme des constituants du mélange est constant, tandis qu'au sein du diluant réactif la proportion relative, en % massique, de M1 par rapport à la somme de M1 et M2 varie d'un mélange à l'autre. Ceci permet astucieusement de contrôler la viscosité des deux mélanges tout en faisant varier l'indice de réfraction de chacun de ces mélanges.

### Exemple 3 : fabrication de polymères réactifs (P2) de type polyéthers fluorés.

On dispose, en tant que polymères précurseurs de polymères réactifs, de différents polymères de type polyéthers fluorés, diols, comportant un nombre d'unités monomères égal à m, m étant compris selon l'invention entre 10 et 1000, de préférence entre 20 et 100, et dont la structure générale de la chaîne est :
- -(-OCF₂-CF₂-)ₓ-(-OCF₂-)_{y}-, avec x+y=m. C'est un produit commercial, le FOMBLIN Z, vendu par la Société Ausimont;
- -(-OCF₂-CF(CF₃)-)ₘ-. C'est un produit commercial, le KRYTOX, vendu par la Société Du Pont de Nemours;
- -(-OCF₂-CF₂-CF₂-)ₘ-. C'est un produit commercial, le DEMNUM, vendu par la Société Daikin;
- -(-OCF₂-CF₂-CH₂-)ₘ-. C'est un produit commercial, le DEMNUM H, vendu par la Société Daikin.

Différents polymères (P2) sont alors obtenus en faisant réagir deux moles de chlorure de méthacryloyle sur une mole d'un des polymères précurseurs précédents. Selon une variante, on obtient un résultat sensiblement identique par réaction de transestérification de méthacrylate de méthyle en présence d'un catalyseur tel que l'acétylacétonate de zirconium. Les polymères (B) ainsi obtenus comportent deux groupements réactifs, de type acrylate.

### Exemple 4 : : fabrication de polymères réactifs (P3) non fluorés

On fabrique un polymère photo réactif de formule suivante (P3) :

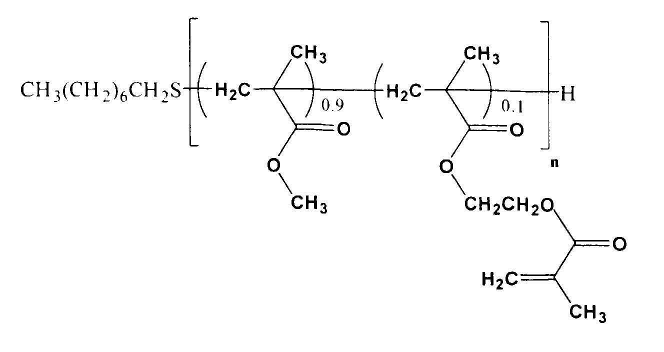

Pour cela on synthétise dans un premier temps un copolymère précurseur sur lequel on introduit ensuite des groupements méthacrylates.

La synthèse du polymère précurseur est réalisée à partir des matières premières suivantes : deux monomères, le méthacrylate de méthyle (MMA) et le méthacrylate d'hydroxyéthyle (HEMA) en proportions molaires respectives 90/10, l'agent de transfert étant l'octane thiol à raison de 3,3% mol/mol de la quantité totale de monomères et l'amorceur thermique l'azoisobutyronitrile (AIBN) à raison de 1% mol/mol. La réaction est effectuée dans le tétrahydrofurane (THF) comme solvant à la température de 65°C.

Le polymère obtenu a une masse moléculaire d'environ 6500 et un degré de polymérisation moyen de l'ordre de 60, ce qui représente un nombre de fonctions hydroxyles potentiellement substituées par des fonctions acrylates de 6 par chaîne polymère.

Le polymère P3 est alors obtenu en faisant réagir sur le polymère précédent, dans le dichlorométhane (CH₂Cl₂) et à une température de 30°C, deux équivalents d'anhydride méthacrylique par rapport à la quantité totale de fonctions potentiellement substituées par des fonctions acrylates. La réaction est catalysée par de la 4-diméthylaminopyrydine (DMAP).

On fabrique ensuite de la même manière un monomère servant à faire varier l'indice de réfraction des résines, le méthacrylate de trichloroéthyle (n_{D}= 1,4878), en faisant réagir du trichloroéthanol sur de l'anhydride méthacrylique en présence de DMAP.

On prépare alors de la façon suivante deux mélanges ou résines photo réactives d'indice de réfraction différent contenant chacun 1% d'hydroxycyclohexylphénylcétone (Irgacure 184) comme photo amorceur:

Le premier mélange a une viscosité de 5 Pa.s à 20°C et comporte 50% en poids de polymère P1 et 50% d'un diluant réactif constitué de 20% en poids de méthacrylate de trichloroéthyle et 80% de MMA, son indice de réfraction est égal à 1,46.

Le deuxième mélange a une viscosité de 5 Pa.s à 20°C et comporte 52% de polymère P1 et 48% d'un diluant réactif constitué de 80% en poids de méthacrylate de trichloroéthyle et 20% de MMA, son indice de réfraction est égal à 1, 482.

### B/ Fabrication de fibre optique plastique

### Exemple 5 : Fabrication d'une fibre optique plastique polymérisée 9 à gradient d'indice à partir des résines amorphes de l'exemple 2 à base de polymère photoréactif de type poly-α,(β)-fluoro(meth)acrylate P1.

Le procédé de fabrication de ladite fibre optique plastique polymérisée 9 à gradient d'indice selon l'invention est illustré par la figure 1, décrite précédemment, dans le cas de deux résines d'indice de réfraction 1,427 et 1,403 (Δn= 0,024) et de viscosités sensiblement équivalentes et égales respectivement à 8,2 et 6,9 Pa.s à 20°C. L'enceinte 8 a un diamètre interne environ égal à 10 cm. La zone 8a est chauffée à une température d'environ 30°C, les zones 8b et 8c sont refroidies à une température d'environ 0°C, la hauteur totale des zones 8a, 8b et 8c calorifugées étant d'environ 30 cm. Les plaques 2a et 2b ont un diamètre d'environ 10 cm, et les trous 12 ont chacun un diamètre d'environ 1 mm. La pression appliquée est d'environ 10⁵ Pa.

Le profil d'indice de réfraction de la fibre polymérisée 9 ainsi obtenue, du type de celui illustré à la figure 3, est de type gradient d'indice quasi parabolique, homogène sur la longueur de la fibre 9, pratiquement lissé et figé dans le réseau polymère. La variation de différence d'indice de réfraction entre le centre et la périphérie de la fibre est d'environ 0,024. Le diamètre de la fibre 9 est de l'ordre de 300 µm. La fibre optique plastique polymérisée 9 à gradient d'indice est à haute tenue en température.

### Exemple 6 : Fabrication d'une fibre optique plastique polymérisée 9 à gradient d'indice selon le dispositif à mélangeur statique à partir des résines réalisées avec des polymères réactifs de type polyéthers fluorés P2 de l'exemple 3.

On réalise une fibre optique plastique polymérisée 9 de la même façon qu'à l'exemple 5.

### Exemple 7 : Fabrication d'une fibre optique plastique polymérisée 9 à gradient d'indice selon le dispositif à mélangeur statique à partir des résines réalisées avec des polymères réactifs de type polyéthers fluorés P3 de l'exemple 4.

On fabrique une fibre optique plastique 9 à gradient d'indice de réfraction à partir de ces deux résines de viscosités égales et d'indices de réfractions différents ( n= 0,022) selon le mode de réalisation de l'exemple 5.

Le profil d'indice de réfraction de la fibre polymérisée 9 ainsi obtenue est de type gradient d'indice quasi-parabolique homogène sur la longueur de la fibre 9, pratiquement lissé et figé dans le réseau polymère. La variation d'indice de réfraction entre le coeur et la périphérie est d'environ 0,022, la fibre 9 ayant un diamètre de l'ordre de 300 µm et possédant une haute tenue en température.

Bien entendu la fibre optique plastique selon l'invention ne se limite pas aux représentations et aux exemples décrits ci-dessus. Par exemple il peut être prévu selon une variante de procéder au dépôt d'au moins une couche de revêtement sur l'une des fibres optiques plastiques polymérisées obtenues précédemment, afin de la protéger du milieu extérieur et d'augmenter sa résistance mécanique.

## Revendications

1. Procédé de fabrication d'une fibre optique plastique (6) à gradient d'indice, l'indice de réfraction variant continûment entre le centre et la périphérie, ladite fibre (6) étant fabriquée à partir d'au moins un polymère P et d'au moins un composé M1 permettant de faire varier l'indice de réfraction,
ledit procédé comprenant :
• la préparation de deux compositions (13, 14) d'indice de réfraction différent, la différence d'indice de réfraction entre les deux compositions étant au moins de 5. 10⁻³, comprenant chacune au moins le polymère P, l'une desdites compositions, dite première composition, comprenant en outre au moins le composé M1, un photo amorceur de réticulation étant présent dans au moins une desdites compositions (13, 14),
• la diffusion des deux compositions (13, 14) l'une dans l'autre, et
• le filage dudit mélange de façon à obtenir une fibre optique plastique (6) à gradient d'indice,
**ledit procédé étant caractérisé en ce que :**
• l'on choisit le polymère P et le composé M1 tels que :
- ledit polymère P est de masse moléculaire comprise entre 1000 et 20 000 et ledit composé M1 est de masse moléculaire comprise entre 100 et 1000,
- ledit composé M1 comprend au moins un groupement fonctionnel réactif choisi dans le groupe formé par les vinyls et les acrylates,
- le polymère P comprend au moins un groupement fonctionnel réactif choisi dans le groupe formé par les vinyls et les acrylates,
- l'un au moins des deux composés P et M1 est au moins mono fonctionnel, l'autre des deux composés P et M1 est au moins bi-fonctionnel, **en ce que**
• l'on procède en outre avant le filage au mélange actif des deux compositions (13, 14) à l'aide d'au moins un moyen de mélange (2, 16, 17, 26) afin d'obtenir la variation continue de l'indice de la fibre optique (6), **et en ce que**
• le filage de la fibre optique plastique (6) à gradient d'indice est suivi d'une réticulation (7) conduisant à un réseau tridimensionnel réticulé.

2. Procédé selon la revendication 1 tel que la cinétique de réticulation est telle que, sous insoltation maximale et transformation complète du photo amorceur, le temps de gel est inférieur à 10 s.

3. Procédé selon la revendication 2 tel que le temps de gel est inférieur à 2 s.

4. Procédé selon l'une des revendications 1 à 3 tel que la seconde desdites compositions (13, 14) comprend au moins un composé M2 permettant lui aussi de faire varier l'indice de réfraction, le composé M2 étant d'indice de réfraction sensiblement différent de l'indice de réfraction de M1, ayant une masse moléculaire comprise entre 100 et 1000, et comprenant au moins un groupement fonctionnel réactif choisi dans le groupe formé par les vinyls et les acrylates.

5. Procédé selon la revendication 4 tel que les composés M1 et M2 sont de viscosité pratiquement identiques et tel que la proportion en masse dudit polymère P par rapport aux constituants de la composition est pratiquement constante pour chacune desdites compositions (13, 14).

6. Procédé selon l'une des revendications 1 à 5 tel que le mélange des deux compositions (13, 14) est réalisé à une température telle que la viscosité de chacune des deux compositions (13, 14) est comprise entre 1 et 25 Pa.s.

7. Procédé l'une des revendications 1 à 5 tel que le filage est réalisé à une température telle que la viscosité de chacune des deux compositions (13, 14) est supérieure à 50 Pa.s.

8. Procédé selon l'une des revendications 1 à 7 tel que tout composant d'une desdites compositions (13, 14) est un matériau au moins partiellement halogéné.

9. Procédé selon la revendication 8 tel que, dans le cas de la présence de composé M2 dans la seconde desdites compositions (13, 14), l'un des deux composés M1 ou M2 est au moins partiellement fluoré et l'autre des deux composés M2 ou M1 est au moins partiellement chloré ou chloro fluoré.

10. Dispositif de mise en oeuvre du procédé selon l'une des revendications 1 à 9, **caractérisé en ce que** le moyen de mélange (2, 16, 17, 26) utilisé est un mélangeur (1) de type statique.

11. Dispositif selon la revendication 10 tel que le mélangeur (1) comprend au moins deux plaques (2a, 2b) l'une au-dessus de l'autre, chaque plaque (2a, 2b) étant perforée par une pluralité de trous (12), lesdits trous (12) étant disposés en opposition les uns par rapport aux autres d'une plaque (2a, 2b) à une autre plaque adjacente (2b, 2a).

12. Dispositif selon la revendication 10 tel que le mélangeur (1) comprend au moins une cartouche (17) à billes (18).

13. Dispositif selon la revendication 12 tel que les billes (18) de la cartouche (17) sont de diamètre pratiquement identique les unes par rapport aux autres.

14. Dispositif selon la revendication 12 tel qu'au moins une partie des billes (18) de la cartouche (17) est de diamètre sensiblement différente d'au moins une autre partie des billes (18) de la cartouche (17).

15. Dispositif selon la revendication 10 tel que le mélangeur (1) comprend une pluralité de chicanes (16).

16. Dispositif de mise en oeuvre du procédé selon l'une des revendications 1 à 9, **caractérisé en ce que** le moyen de mélange (2, 16, 17, 26) utilisé est un mélangeur (24) de type dynamique.

17. Dispositif selon la revendication 16 tel que le mélangeur (24) comprend au moins un arbre (19) autour duquel est fixée au moins une pale (20a, 20b) de mélange.

18. Dispositif selon la revendication 17 tel que ladite pale (20a, 20b) comprend en outre au moins un moyen de distribution (22a, 22b, 22c, 22d) d'au moins une des deux compositions (13, 14).
